(19) Europäisches Patentamt
European Patent Office
Office européen des brevets

(11) Publication number: 0 108 208
B1

(12) **EUROPEAN PATENT SPECIFICATION**

(45) Date of publication of patent specification: **27.04.88**

(51) Int. Cl.[4]: **C 08 L 83/04,** C 09 J 7/02 // (C08L83/04, 83:04)

(21) Application number: **83108448.8**

(22) Date of filing: **27.08.83**

(54) **Solventless silicone controlled release compositions.**

(30) Priority: **10.09.82 US 416576**

(43) Date of publication of application:
**16.05.84 Bulletin 84/20**

(45) Publication of the grant of the patent:
**27.04.88 Bulletin 88/17**

(84) Designated Contracting States:
**AT BE DE FR GB IT NL**

(56) References cited:
**FR-A-2 450 642**
**GB-A-1 055 777**
**GB-A-2 022 115**
**GB-A-2 051 101**
**GB-A-2 052 539**
**GB-A-2 065 153**
**GB-A-2 073 765**
**US-A-4 347 346**

(73) Proprietor: **GENERAL ELECTRIC COMPANY**
**1 River Road**
**Schenectady New York 12305 (US)**

(72) Inventor: **Dallavia, Anthony James, Jr.**
**461 Forest Hill Road - Apt. 7C**
**Macon Georgia 31210 (US)**
Inventor: **Eckberg, Richard Paul**
**P.O. Box 502**
**Round Lake, New York 12151 (US)**

(74) Representative: **Sieb, Rolf, Dr.**
**General Electric-Deutschland Patentabteilung**
**Kaiserstrasse 41**
**D-6000 Frankfurt am Main 1 (DE)**

**EP 0 108 208 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to polysiloxane release coating compositions. More particularly, it relates to low viscosity polysiloxane compositions containing increased amounts of MQ silicone resins without the need of solvents which are particularly well-adapted to controlled release applications.

Silicone compositions have long been used as release coatings, which are useful in many applications whenever it is necessary to provide a surface or material which is relatively nonadherent to other materials which would normally adhere thereto. Silicone release compositions are widely used as coatings which release pressure-sensitive adhesives for labels, decorative laminates, transfer tapes, etc. Silicone release coatings on paper, polyethylene, Mylar®, and other such substrates are also useful to provide non-stick surfaces for food handling and industrial packaging applications.

Silicone compositions previously developed as release coatings have included solutions in organic solvents, water dispersed emulsions and solvent-free ("100 % solids") silicone fluids. The solventless silicones are increasingly preferred for release applications because of the energy inefficient evaporation steps, solvent recovery and costly pollution abatement equipment associated with use of the solvent- and water-borne systems.

Solventless silicone release compositions, such as those taught by, U.S.—A—4,256,870, are typically two-part systems: One part is a mixture of a vinyl-containing linear diorganopolysiloxane, a precious metal catalyst and an inhibitor. The other part is a ≡SiH-containing crosslinker, such as a polymethylhydrogensiloxane fluid. These parts may be combined in a coating bath, applied to a substrate and cured to an adhesive coating by a thermally-accelerated addition cure reaction illustrated as follows:

$$\text{(I)} \qquad \equiv Si{-}CH{=}CH_2 + HSi\equiv \xrightarrow[\Delta]{\text{catalyst}} \equiv SiCH_2CH_2Si\equiv$$

Cured release coatings using 100% solids silicone compositions exhibit exceptionally low, or "premium", release, i.e. very little force is required to separate most adhesives from the silicone-treated surface. However, most commercial applications demand higher (or "tighter") release from common pressure-sensitive adhesives, and so additives, called "controlled-release additives" or "CRAs" are added to low-release compositions to raise their release.

Branched silicone resins, such as vinyl-MQ silicone resins are typically employed as release-increasing agents in CRAs. Conventional CRA formulations, such as those described by, U.S.—A—4,123,664 and U.S.—A—3,527,659 contain up to 40—45% by weight vinyl-MQ resin (described in a more detail *infra*) dissolved in a vinyl-functional diorganopolysiloxane, plus a catalyst and inhibitor.

Although they currently enjoy widespread use, conventional solventless CRAs have major disadvantages resulting from their high cost and processing limitations. The vinyl MQ resins cannot be incorporated into vinyl functional polysiloxane fluids in amounts greater than 40—45% by weight without exceeding a workable application viscosity: At such levels the resulting compositions have viscosities >5000 cps (5Pa/s), 10 times the preferred viscosity for rotogravure application to papers or films. See e.g. U.S.—A—4,216,252. Consequently, the MQ resin content of CRAs is held down, but then large amounts of these expensive materials are added to low release solutions to bring about a higher release. This necessity of using high levels of costly additives in conventional solventless controlled release compositions often makes their use prohibitively expensive, in spite of the energy costs and pollution abatement costs their use avoids.

GB—A—1 055 077 describes a potting compound comprising a siloxane copolymer, optionally, a copolymer of $SiO_2$, $Me_3SiO_{1/2}$ and $Me_2ViSiO_2$ siloxane units, a linear or cyclic siloxane polymer or copolymer, a liquid alpha-olefin and a platinum catalyst.

FR—A—2 450 642 describes a controlled release composition comprising a diorganopolysiloxane base polymer, a copolymer having $(CH_3)_3SiO_{1/2}$, $(CH_3)_2(CH_3)_2(CH_2{=}CH)SiO_{1/2}$ and $SiO_{4/2}$ units, a methyl-hydrogenopolysiloxane and a catalyst.

It has now been discovered that efficient, inexpensive solventless CRAs having low viscosities are formulated by dispersing MQ or vinyl-MQ silicone resins in high-boiling, unsaturated reactive diluents. The olefinic materials are less expensive than polysiloxane fluids and their low viscosities permit high levels of the MQ resins to be dispersed.

Accordingly, it is an object of the present invention to provide controlled release additives which may contain above about 40% by weight MQ silicone resin while maintaining a low application viscosity.

It is a further object of the present invention to provide a solvent-free silicone release coating composition providing intermediate release (as opposed to premium release).

It is a further object of the present invention to provide controlled release additives and solventless controlled release compositions particularly well suited for paper release applications.

These and other objects are accomplished herein by a controlled release additive comprising an uncondensed silicone MQ resin having $R_3SiO_{1/2}$ and $SiO_{4/2}$ units, where R may be the same or different monovolent hydrocarbon radical of no more than 2 carbon atoms, dispersed in an unsaturated non-volatile organic reactive diluent selected from the group consisting of dibutylmaleate, decylvinylether, dodecyl-vinylether, camphene, $C_{(16-18)}$ alpha-olefin and meta-bis isopropenylbenzene.

Also contemplated herein is a solventless silicone controlled release composition comprising:

(1) a diorganopolysiloxane base polymer having up to 20% by weight alkenyl or silanol functional groups and a viscosity of from 50 to 100,000 centipoise (0.05 to 100 Pa/s) at 25°C;

(2) controlled release additive;

(3) a polymethylhydrogen siloxane fluid crosslinking agent having up to 100% by weight SiH groups and a viscosity of 25 to 1000 centipoise (0.025 to 1 Pa/s) at 25°C;

(4) an effective amount of a precious metal catalyst for promoting an addition cure hydrosilation reaction between said base polymer, said copolymer and said crosslinking agent; and

(5) an amount of dialkyl carboxylic ester containing carbon-to-carbon unsaturation effective to inhibit the precious metal-catalyzed hydrosilation reaction at temperatures below the heat cure temperature of said silicone controlled release composition, characterised in that the said controlled release additive comprises an uncondensed silicone MQ resin having $R_3SiO_{1/2}$ and $SiO_{4/2}$ units, where R may be the same or different monovolant hydrocarbon radical of no more than 2 carbon atoms, dispersed in an unsaturated non-volatile organic reactive diluent selected from the group consisting of dibutyl maleate, decylvinylether, dodecylvinylether, camphene, $C_{(16-18)}$ alpha-olefin and meta-bis isopropenylbenzene.

Other features of the present invention include controlled release additive and release compositions additionally containing vinyl-functional silicone gums. These CRAs and compositions were found to have more stable aged release than known controlled release formulations.

The controlled release additives of the present invention are prepared by dispersing silicone MQ resins or vinyl-functional silicone MQ resins in high-boiling unsaturated organic monomers. These CRAs may be added directly to a premium release composition to raise its release performance. For convenience, proportional amounts of a precious metal hydrosilation catalyst may be included in the CRA, so that subsequent direct addition to the release composition does not dilute the catalyst to less effective levels.

The silicone resins employed in the present invention are polysiloxanes having primarily monofunctional (M) units or tetrafunctional (Q) units. A general discussion of these resins is found in Chapters 1 and 6 of Noll, *Chemistry and Technology of Silicones*, 2nd Ed. 1968.

The MQ resins are made up of M units having the formula $R_3SiO_{1/2}$ and Q units having the formula $SiO_{4/2}$, with the ratio of M to Q being roughly 0.5 to 1.0 and preferably 0.65. The R groups may be, independently, the same or different monovalent hydrocarbon radicals of no more than 2 carbon atoms. Such radicals include, for example, methyl, ethyl, vinyl or ethynyl. Methyl and vinyl are preferred.

Uncondensed MQ resins will ordinarily contain 2—5% by weight silanol, which means that contact with the precious metal catalysts which will promote the hydrosilation reaction (I), above, will also promote a silanol condensation in the presence of SiH-containing compounds, as follows:

$$\text{(II)} \qquad \equiv SiOH + HSi\equiv \xrightarrow[\Delta]{\text{catalyst}} \equiv SiOSi\equiv + H_2\uparrow$$

Silanol-containing MQ resins, therefore, will undergo a condensation cure and are suitable for use in conjunction with silanol-functional or vinyl-functional silicone release compositions.

Silanol-functional polysiloxanes which will cure in the presence of SiH-containing crosslinkers and condensation catalyst to form release coatings are conveniently prepared by base-catalyzed equilibration of cyclic polysiloxane monomers, such as octamethylcyclotetrasiloxane. The base, e.g. KOH, is commonly neutralized with phosphoric acid or silylphosphate to permit stripping the silanol products of light ends; but this mode of neutralization generates acid salts (i.e., acid phosphates) which catalyze condensation of the SiOH groups with the SiH groups of the SiH-functional polysiloxane fluids used as crosslinkers in silanol release compositions. In the presence of the acid salts, therefore, a solvent-free blend of silanol and SiH-containing fluids (and silanol MQ resins) quickly crosslinks to a gel and liberates hydrogen, as in reaction (II) above.

Producing silanol fluids by acid catalyzed processes avoids the formation of acid salts but has proved difficult to adapt to large scale operations.

Low-to-medium viscosity devolatized silanol fluids are stable in the presence of SiH-containing crosslinkers if they are neutralized with tris(2-chloroethyl)phosphite rather than by phosphoric acid. Thus in the controlled release compositions of the present invention which are based on silanol-functional diorganopolysiloxane fluids, increased storage stability is achieved by neutralizing the basic hydrolysis catalyst with tris(2-chloroethyl)phosphite.

The reactive diluents used herein to disperse the MQ resins are any high-boiling unsaturated hydrocarbon fluid in which high levels, for example, over 40% by weight, of a given MQ resin is soluble without increasing the viscosity of the dispersion beyond useful application viscosities (e.g., $>$5000 cps)(5Pa/s). By way of illustration, such unsaturated organic monomers will include dibutylmaleate, decylvinylether, dodecylvinylether, camphene, meta-bis-isopropenylbenzene and $C_{(16-18)}$ α-olefins generally. Mixtures of such compounds, and mixtures of unsaturated organic monomers with polysiloxane fluids, are also contemplated. The preferred compounds are high-boiling $C_{(16-18)}$ alpha-olefins.

In the solventless release compositions of the invention, the diorganopolysiloxane base polymer may

be (as indicated previously) either silanol- or alkenyl-functional. Preferably the polymer is a vinyl chainstopped polysiloxane having the general formula:

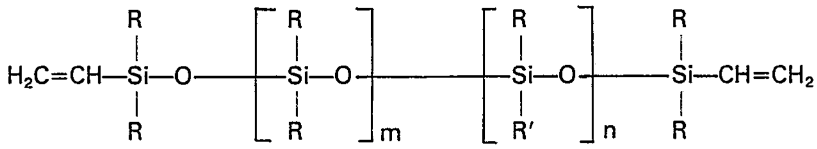

wherein R is a monovalent hydrocarbon radical free of unsaturation, such as methyl, ethyl, propyl, butyl, and the like, but not ordinarily including phenyl for paper release applications. R′ is a hydrocarbon radical having alkyenyl unsaturation. Typically R′ represents vinyl groups but may also represent allylic or cyclo-alkenyl unsaturated groups. m and n are positive integers such that the polymer has up to about 20% R′ groups. The viscosity of such polysiloxanes will be from about 50—100,000 centipoise (0.05—100 Pa/s) at 25°C. R′ is preferably vinyl and where R is vinyl, the viscosity of the polymer is preferably from 300—550 centipoise (0.3—0.55 Pa/s) at 25°C.

Methylhydrogen fluid is often used by those skilled in the silicone art as a crosslinking agent for addition-cured silicone systems. Particularly useful as a crosslinking agent for the present invention is a trimethyl chainstopped polymethylhydrogen siloxane fluid having from 10% to 100% SiH groups and having a viscosity in the range of 25 (0.025 Pa/s) to 1000 centipoise (1 Pa/s) at 25°C.

The curing reaction which takes place between the vinyl-functional polysiloxane and the polymethylhydrogensiloxane fluid crosslinking agent is an addition cure reaction, also known as a hydrosilation. The composition of the present invention may be thermally cured by means of a platinum catalyzed crosslinking reaction between pendant vinyl groups of a dialkylvinyl chainstopped polydialkyl-alkylvinylsiloxane copolymer and a trimethyl chainstopped polymethylhydrogen fluid.

A useful catalyst for facilitating the hydrosilation curing reaction is the Lamoreaux catalyst as described in U.S.—A—3,220,972. Other platinum-metal catalysts can also be utilized in practicing the present invention and their selection depends upon such factors as speed of the reaction required as well as expense, useful shelf-life, useful pot-life and the temperature at which the cure reaction is to take place. Such platinum-metal catalysts include those which utilize the precious metals ruthenium, rhodium, palladium, osmium, iridium and platinum, and complexes of these metals. For coating compositions as described above, the amount of catalyst ranges from 10 to 500 ppm, depending on the factors of speed of reaction and cost. Preferably, the amount of catalyst is 10—100 ppm of precious metal.

The present controlled release composition, comprising a diorganopolysiloxane base polymer, an MQ resin dispersed in a reactive diluent, a SiH-containing crosslinking fluid, and a precious metal hydrosilation catalyst, will thermally cure on a substrate and give a smooth, nonadherent surface. However, it is necessary to include an inhibitor in the release composition in order to avoid premature curing and gellation of the composition. Suitable compounds to retard the hydrosilation cure reaction at ambient temperatures are well known in the art, but best results have been achieved with the diallylic carboxylic esters fully disclosed in U.S.—A—4,256,870. The preferred inhibitors are diallylmaleate, dimethylmaleate, and butylallylmaleate.

Another feature of the instant invention derives from the discovery herein that very efficient controlled release additives for solventless silicone release compositions are obtained when small amounts of vinyl-containing polysiloxane gums are included in the CRA or CRA-modified release composition. The gums are vulcanizable dimethylvinyl-chainstopped linear diorganopolysiloxanes having a vinyl content of from 0.05 to 5.0 mole percent and a molecular weight ranging from 200,000 to 800,000. The preferred gums are dimethylvinyl-chainstopped linear polydimethylmethylvinylsiloxane copolymer gums having a vinyl content of approximately 0.2 mole percent and a molecular weight of around 250,000.

Compositions containing vinyl gums cure as rapidly as premium release compositions and have comparable release stability over time (stable aged release). This, combined with the favorable costs, raw material availability and compatibility with conventional solvent-free systems, makes the vinyl gum-containing CRAs of the present invention efficient and attractive additives for controlled release applications.

Example 1

To test the effectiveness of the control release additives of the present invention, the following solventless CRAs were prepared using either uncondensed MQ resin (60% solution in toluene) or vinyl MQ resin (60% solution in xylene). In all cases, the MQ resin was mixed with an unsaturated non-volatile organic reactive diluent, the aromatic solvent was removed by vacuum at temperatures below 80°C to prevent loss of the olefin component, and sufficient platinum catalyst was added to furnish approximately 100 parts per million platinum.

| CRA | Olefin diluent | Resin | Wt.% resin | Viscosity (%) |
|---|---|---|---|---|
| #1 | dibutylmaleate | uncondensed MQ | 50 | 170 |
| #2 | decylvinylether | " | 50 | 27 |
| #3 | dibutylmaleate | " | 60 | 765 |
| #4 | dodecylvinylether | " | 60 | 110 |
| C(i) | vinyl-stopped dimethyl fluid* | " | 50 | 420,000 |
| C(ii) | vinyl-stopped dimethyl fluid* | " | 37½ | 1,850 |
| #5 | 64% camphine, 36% vinyl stopped dimethyl fluid* | " | 60 | 280 |
| #6 | 64% $C_{(16-18)}$ alpha-olefin, 36% vinyl-stopped dimethyl fluid* | " | 60 | 750 |
| #7 | 64% $C_{(16-18)}$ alpha-olefin, 36% vinyl-stopped dimethyl fluid* | " | 60 | 800 |
| #8 | meta-bis-isopropanelebenzene | " | — | 220 |
| #9 | alpha-olefin+vinyl gum** | " | — | 450 |

* 200 centipoise dimethyl vinyl-chainstopped linear polydimethylsiloxane fluid

** 105 parts of a $C_{16}$—$C_{18}$ alpha-olefin mixture (Ethyl Corporation) plus 15 parts of a dimethylvinyl-chainstopped linear polydimethylmethylsiloxane copolymer gum (0.2 mole % vinyl, 250,000 average molecular weight; General Electric Co.

In order to determine the effect of the CRAs on cure, the following coating baths were made up:

| Bath | Base polymer* (parts by weight) | CRA, (parts by weight) | Cross-linker** (parts by weight) |
|---|---|---|---|
| #1 | 7.5 | #1, 2.5 | 0.5 |
| #2 | 7.5 | #2, 2.5 | 0.5 |
| #3 | 7.5 | #3, 2.5 | 0.5 |
| #4 | 7.5 | #4, 2.5 | 0.5 |
| #5 | 8 | #9, 2 | 0.5 |
| #6 | 8 | #8, 2 | 0.5 |
| C(iii) | 10 | — | 0.5 |
| C(iv) | 10 | — | 0.4 |

* base polymer equals: vinyl-stopped dimethyl polysiloxane fluid plus a vinyl gum cure accelerator, platinum catalyst (~150 ppm Pt) and dimethyl maleate

** cross-linker equals: low viscosity methyl chainstopped polylinear polymethyl hydrogen siloxane fluid

These coating baths were applied to 40 pound supercalendered kraft paper substrates, placed in a 120°C forced air oven until the coating compositions cured to a smear- and migration-free abhesive surface. The minimum cure time was determined:

| Bath | Cure time (sec) |
|---|---|
| #1 | 10 |
| #2 | 10 |
| #3 | 20 |
| #4 | 30 |
| #5 | 30 |
| #6 | 35 |
| C(iii) | 10 |
| C(iv) | 30 |

It can be seen that the MQ resin content slows cure but does not prevent cure in this system.

In order to assess the efficiency of the CRA compositions in terms of release, it was necessary to coat out of solvent. The following solutions were prepared:

| Bath | Hexane (parts by weight) | Base polymer (parts by weight) | CRA (parts by weight) | Cross-linker (parts by weight) |
|---|---|---|---|---|
| a | 80.0 | 20.0 | (no CRA) | 1 |
| b | 80.0 | 15.0 | conventional CRA* | 1 |
| c | 80.0 | 15.0 | #5,5 | 1 |
| d | 80.0 | 15.0 | #6,5 | 1 |
| e | 80.0 | 15.0 | #7,5 | 1 |
| f | 80.0 | 15.0 | #1,5 | 1 |
| g | 80.0 | 15.0 | #2,5 | 1 |
| h | 80.0 | 15.0 | #3,5 | 1 |
| i | 80.0 | 15.0 | #4,5 | 1 |
| j | 80.0 | 16.0 | #9,4 | 1 |
| k | 80.0 | 16.0 | #8,4 | 1 |
| l | 80.0 | 16.0 | conventional CRA, 4 | 1 |

* 3 parts vinyl MQ resin dissolved in low viscosity vinyl-functional dimethylpolysiloxane

** a vinyl-stopped dimethyl polysiloxane with vinyl gum cure accellerator, platinum catalyst and dimethylmaleate inhibitor (grade SS-4310; General Electric Co.)

Each bath was coated onto 40 pound (18.14 kg) kraft paper with a No. 3 wire-wound rod, then placed in a 120° forced air oven for 30 seconds to insure complete cure.

The cured silicone-coated paper was laminated with a 5 mil (0.127 mm) of Coated Products' #4950 SBR pressure sensitive adhesive which was dried for 10 minutes at ambient temperatures, then for 6 minutes at 60°C. A second sheet of kraft paper was placed atop the adhesive layer, and 2″×9″ (5.08 cm×22.86 cm) tapes of the resulting laminates were prepared. A Soctt tester was used to record the force (in grams) required to separate the silicone lamina from the adhesive lamina when the laminae were pulled apart at a 180° angle at 400 ft/min (121.92 m/min). Release was also recorded for tapes aged 2 weeks at room temperature.

Quantitative release observed is tabulated below:

| | Release grams | | |
|---|---|---|---|
| Bath | Initial | Aged | Aged differential release (grams)* |
| A | 20—40 | 20—30 | 0 |
| B | 50—70 | 65—95 | 55 |
| C | 80—110 | 100—150 | 100 |
| D | 90—120 | 110—160 | 110 |
| E | 80—100 | 80—120 | 75 |
| F | 70—100 | 160—210 | 160 |
| G | 100—130 | 190—250 | 195 |
| H | 65—85 | 150—180 | 140 |
| I | 65—95 | 175—225 | 175 |
| J | 60—80 | 80—85 | 85—105 |
| K | 55—75 | 70—95 | 57.4 |
| L | 40—60 | 60—70 | 40 |

* Aged differential release=(average release—average release of unaltered release composition (Bath A)).

Example 2

In order to demonstrate the neutralization of the KOH-catalyzed preparation of silanol-functional materials, the following samples were prepared:

Sample A

3500 parts by weight of dimethyl cyclic tetramer plus 0.20 parts by weight finely-ground KOH were placed in a 5 liter flask and heated to 150—155°C for 90 minutes. The liquid then begin to rapidly build in viscosity and 10 parts by weight of water were added. Equilibration was continued for 3 more hours at 150—155°C, resulting in a 1600 cps (1.6 Pa/s) viscosity fluid which measured 34.7 ppm KOH by titre. The hot equilibrate was treated with 0.18 parts by weight of tris(2-chloroethyl)phosphite and the mixture held at 150° for 30 minutes. Prior to stripping, the tris(2-chloroethyl)phosphite treated polymer titred slightly basic (<3 ppm KOH). Stripping the silanol fluid under full vacuum (about 10 mm Hg pressure) at 160—180°C for two hours afforded 2700 parts by weight of a 2850 cps (2.85 Pa/s) viscosity polymer. Processing was completed by adding 89 parts by weight of a 30 cps (0.03 Pa/s) viscosity methylhydrogen crosslinker, stirring until uniform, and filtering. The product (Sample A) was a water-white 100% solids silicone blend, 2325 cps (2.325 Pa/s) viscosity, containing 97% silanol-stopped dimethylsilicone fluid and 3% polymethylhydrogen crosslinker.

Sample B

3422 parts by weight of cyclic tetramer, 0.3 parts by weight KOH, and 146 parts by weight of a very-low-viscosity silanol-stopped linear dimethyl fluid containing about 8 weight % water as chainstopper were placed into a flask. This mixture formed as viscous polymer after 40 minutes at 153°C. Neutralization was accomplished by addition of 0.54 parts by weight tris(2-chloroethyl)phosphite and stirring at 150°C for two hours. Light ends were removed by stripping to yield 3040 parts by weight of silanol fluid to which 101 parts by weight methylhydrogen crosslinker were added. The filtered product (Sample B) was a clear viscous mixture, 5250 cps (5.25 Pa/s) in viscosity.

Sample C

A control was prepared by mixing 3.3 parts of methylhydrogen fluid with 100 parts of a silanol-stopped linear dimethyl fluid prepared by KOH equilibration and phosphoric acid neutralization (similar to examples 1 and 2 except that a molar equivalent amount of $H_3PO_4$ was substituted for tris(2-chloroethyl)phosphite.

The performance of the 3 samples described above was compared to the performance of commercial

silanol composition (General Electric Co.) prepared by acid-catalyzed equilibration of cyclic tetramer and water (Sample D below). Shelf stability was measured by monitoring the viscosity of the compositions as a function of time as they were stored at room temperature (25°C). Results obtained are presented below:

| Composition | Initial viscosity, Pa/s | 1 Month Pa/s | 2 Month Pa/s | 4 Month Pa/s | 6 Month Pa/s |
|---|---|---|---|---|---|
| A | 2.325 | 2.29 | 2.28 | 2.36 | 2.332 |
| B | 5.25 | 4.90 | 5.30 | 5.30 | 5.30 |
| C | 3.10 | >100 | gel | — | — |
| D | 3.80 | 3.88 | 3.95 | 4.30 | 4.70 |

These 4 samples were tested for release performance in the same manner as Example 1, except that the compositions were applied to the kraft paper out of a Lexane solvent with a No. 12 wire-wound rod and cured in a 150°C oven for 30 seconds. The following results were observed:

| Composition | Measured release (parts by weight) |
|---|---|
| A | 150—170 |
| B | 145—170 |
| C | 150—175 |
| D | 130—165 |

It can be seen that the silanol-functional compositions neutralized according to the present invention (Samples A and B) have a longer shelf-life than conventionally-neutralized silanol polymethylhydrogensiloxane compositions.

**Claims**

1. A controlled release additive comprising an uncondensed silicone MQ resin having $R_3SiO_{1/2}$ units and $SiO_{4/2}$, where R represents the same or different monovalent hydrocarbon radical of no more than 2 carbon atoms, characterized in that the uncondensed silicone MQ resin is dispersed in an unsaturated non-volatile organic reactive diluent selected from the group consisting of dibutyl maleate, decylvinylether, dodecylvinylether, camphene, $C_{(16-18)}$ alpha-olefin and meta-bis-isopropenylbenzene.

2. The controlled release additive of Claim 1, wherein said silicone MQ resin is a vinyl silicone MQ resin and said reactive diluent is a $C_{(16-18)}$ alpha-olefin mixture.

3. The controlled release additive of Claim 1 which also contains a small amount of a vinyl-containing polysiloxane gum.

4. A solventless silicone controlled release composition comprising:

(1) a diorganopolysiloxane base polymer having up to 20% by weight of alkenyl or silanol-functional groups and a viscosity of from 50 to 100,000 centipoise (0.05 to 100 Pa/s) at 25°C;

(2) a controlled release additive;

(3) a polymethylhydrogen siloxane fluid crosslinking agent having up to 100 parts by weight SiH groups and a viscosity of 25 to 1,000 centipoise (0.025 to 1 Pa/s) at 25°C;

(4) an effective amount of a precious metal catalyst for promoting an additional cured hydrosilation reaction between said copolymer, said additive and said crosslinking agent; and

(5) an amount of dialkyl carboxylic ester containing carbon-to-carbon unsaturation effective to exhibit said hydrosilation reaction at temperatures below the heat cure temperature of said silicone controlled release composition, characterized in that said controlled release additive is as defined in any one of Claims 1 to 3.

5. The composition of Claim 4, wherein said base polymer is a vinyl-chainstopped polydimethylmethylvinylsiloxane copolymer.

**Patentansprüche**

1. Gesteuertes Trennadditiv, enthaltend ein nichtkondensiertes Silikon-MQ-Harz mit $R_3SiO_{1/2}$- und $SiO_{4/2}$-Einheiten, worin R den gleichen oder einen verschiedenen einwertigen Kohlenwasserstoffrest mit nicht mehr als 2 Kohlenstoffatomen bedeutet, dadurch gekennzeichnet, daß das nichtkondensierte

Silikon-MQ-Harz in einem ungesättigten, nicht-flüchtigen, organischen, reaktiven Verdünnungsmittel, ausgewählt aus der Gruppe bestehend aus Dibutylmaleat, Decylvinylether, Dodecylvinylether, Camphen, $C_{(16-18)}$-α-Olefin und meta-Bis-isopropenylbenzol, dispergiert ist.

2. Gesteuertes Trennadditiv nach Anspruch 1, worin das Silikon-MQ-Harz ein Vinylsilikon-MQ-Harz und das reaktive Verdünnungsmittel eine $C_{(16-18)}$-α-Olefin-Mischung ist.

3. Gesteuertes Trennadditiv nach Anspruch 1, das auch eine kleine Menge eines Vinyl-enthaltenden Polysiloxangummis (-kautschuks) enthält.

4. Von Lösungsmittel freie, gesteuerte Silikon-Trennzusammensetzung, enthaltend:

(1) Ein Diorganopolysiloxan-Basispolymeres mit bis zu 20 Gewichtsprozent Alkenyl- oder Silanolfunktionelle Gruppen und einer Viskosität von 50 bis 100 000 Centipoise (0,05 bis 100 Pa · s) bei 25°C;

(2) ein gesteuertes Trennadditiv;

(3) ein flüssiges Polymethylhydrogensiloxan-Vernetzungsmittel mit bis zu 100 Gewichtsteilen SiH-Gruppen und einer Viskosität von 25 bis 1000 Centipoise (0,025 bis 1 Pa · s) bei 25°C;

(4) eine wirksame Menge eines Edelmetall-Katalysators zur Förderung einer ergänzenden Härtungshydrosilationsreaktion zwischen dem Copolymeren, dem Additiv und dem Vernetzungsmittel; und

(5) eine Menge an Dialkylcarbonsäureester, enthaltend Kohlenstoff-zu-Kohlenstoff-Ungesättigtheit, wirksam zur Inhibierung der Hydrosilationsreaktion bei Temperaturen unterhalb der Wärmehärtungstemperatur der gesteuerten Silikon-Trennzusammensetzung, dadurch gekennzeichnet, daß das gesteuerte Trennadditiv ein solches ist, wie es in irgendeinem der Ansprüche 1 bis 3 definiert wird.

5. Zusammensetzung nach Anspruch 4, worin das Basispolymere ein mit Vinyl in der Kette abgebrochenes Polydimethylmethylvinylsiloxan-Copolymeres ist.

**Revendications**

1. Additif de régulation de l'anti-adhérence, comprenant une résine de silicone de type MQ non condensée comportant $R_3SiO_{1/2}$ et $SiO_{4/2}$ comme motifs, où R représente des groupes hydrocarbonés monovalents identiques ou différents ne comportant pas plus de deux atomes de carbone, caractérisé en ce que la résine de silicone de type MQ non condensée est dispersée dans un diluant organique réactif non volatile insaturé choisi parmi le maléate de dibutyle, l'oxyde de décyle et de vinyle, l'oxyde de dodécyle et de vinyle, le camphène, une alpha-oléfine en $C_{16}$-$C_{18}$ et le méta-bis-isopropénylbenzène.

2. Additif de régulation de l'anti-adhérence suivant la revendication 1, dans lequel ladite résine de silicone de type MQ est une résine vinylique de silicone de type MQ et dans lequel ledit diluant réactif est un mélange d'alpha-oléfine en $C_{16}$—$C_{18}$.

3. Additif de régulation de l'anti-adhérence suivant la revendication 1, contenant également une faible quantité d'une gomme de polysiloxane vinylique.

4. Composition de silicone à anti-adhérence ajustée sans solvant, comprenant:

(1) un diorganopolysiloxane comme polymère de base comportant jusqu'à 20% en poids de groupes fonctionnels alkényle ou silanol ayant une viscosité de 50 à 100 000 centipoises (de 0,05 à 100 Pa · s) à 25°C;

(2) un additif de régulation de l'antiadhérence;

(3) un agent de réticulation à base de polyméthylhydrogénosiloxane fluide comportant jusqu'à 100 parties en poids de groupes SiH et ayant une viscosité de 25 à 1 000 centipoises (de 0,025 à 1 Pa · s) à 25°C;

(4) une quantité efficace d'un catalyseur à base d'un métal précieux pour favoriser une réaction de durcissement supplémentaire d'hydrosilation entre ledit copolymère, ledit additif et ledit agent de réticulation; et

(5) une certain quantité d'un ester carboxylique de dialkyle à insaturation carbone-carbone efficace pour donner lieu à ladite réaction d'hydrosilation à des températures inférieures à la température de durcissement à chaud de ladite composition de silicone à anti-adhérence ajustée, caractérisée en ce que ledit additif de régulation de l'anti-adhérence est tel que défini suivant l'une quelconque des revendications 1 à 3.

5. Composition suivant la revendication 4, dans laquelle ledit polymère de base est un copolymère de polydiméthylméthylvinylsiloxane à terminaison de chaîne vinyle.